# EUROPEAN PATENT APPLICATION

(11) **EP 4 637 025 A1**
(43) Date of publication of application: **22.10.2025**
(21) Application number: 24382396.0
(22) Date of filing: 16.04.2024
(51) Int. Cl.: H02S 20/32, F24S 30/425

(54) **SYSTEM FOR ROTATABLY DRIVING AND LOCKING PANELS**

(71) Applicant: CEP-IP Ltd, Cambridge, Cambridgeshire CB1 1BH (GB)
(72) Inventor: GRANT, Thomas McGregor James, Cambridge, CB1 1BH (GB)
(74) Representative: Torner, Juncosa I Associats, SL

(57) **Abstract**

It is disclosed a system for rotatably driving and locking panels including at least one actuation mechanism comprising: a driving mechanism including a driven gear rotative around a first axis and connected to a set of panels, and a pinion gear connected to a driving shaft parallel to the first axis; a locking mechanism and a locking configuration; a pushing mechanism comprising at least one pusher, connected to the driving shaft, and a pusher engagement configuration complementary to the pusher and connected to the driven gear; wherein the locking configuration comprises two locking pins which are configured to, in a locking position of the locking mechanism, prevent movement of the driven gear by interfering with a portion of a round bearing surface of the locking mechanism; and wherein the pusher engagement configuration is located in a plane containing the first axis, and passing between the two locking pins.

## Description

### Technical field

The present invention relates to a system for rotatably driving and locking panels. Said panels may be of any kind, as for example, windows, although the system of the present invention is specially envisaged for rotatably driving and locking solar panels, such as photovoltaic panels.

### Background of the Invention

EP 3303940 A1 discloses a tracking device for solar modules with a row of posts arranged along a longitudinal axis, wherein a crossmember is pivotably mounted on each post and wherein the crossmembers are pivotable about a common pivot axis extending parallel to the longitudinal axis. There is fastened to each crossmember a toothed ring, the toothing of which is in engagement with a motor-driven toothed wheel mounted on the respective post. EP 3303940 A1 also discloses a positive guide which forms a safeguard against transverse displacement of the toothed wheel relative to the toothed ring and that each toothed wheel is mounted on the side of the respective post.

US 2018/0091088 A1 discloses a drive mechanism for rotatably mounting and locking solar panels combining a conventional pinion and arc gear transmission with a locking mechanism, wherein the pinion is coupled to a drive shaft and the arc gear is coupled to the solar panel. The locking mechanism comprises lock plates coupled to the arc gear. Each lock plate has a reaction surface configured to be engaged by the reaction surface attached to the pinion flanked by two rotation slots configured to be engaged by a drive pin attached to the pinion.

Responsive to rotation of the drive shaft by a first amount, engagement of the pinion gear teeth with the arc gear teeth in the first section rotates the arc gear, and responsive to rotation of the drive shaft by a second amount, the arc gear rotates to a stow position at which the reaction surface bears against the bearing surface and locks the arc gear in place.

Responsive to rotation of the drive shaft by a third amount, the slot of the lock plate can engage with the drive pin responsive to which the gear teeth disengage from the pinion gear teeth.

The system of this invention has a general structure similar to the one US 2018/0091088 A1 according to the preamble of claim 1, where instead of a locking plate with reaction surface, two locking pins are used as reaction point, which in an embodiment can freely rotate to avoid excessive friction and in place of the pin and slot configuration to move out of the stow position a disc with a lever to unlock and continue the movement is used.

The proposed system achieves a significant reduction in friction and a reduction in manufacturing costs.

### Description of the Invention

The present invention concerns to a system for rotatably driving an locking panels, as defined in claim 1, and comprises at least one actuation mechanism comprising a driving mechanism including a driven gear comprising gear teeth and at least one toothless gap, said driven gear driving a panel support rotative around a first axis and connected to a set of panels, and a pinion gear comprising pinion gear teeth, coaxial and connected to a driving shaft parallel to the first axis, the driving mechanism defining an engaged position in which the pinion gear is engaged with the driven gear, and an unengaged position in which some teeth of the pinion gear are arranged in the toothless gap unengaged from the driven gear.

According to the present invention, the at least one actuation mechanism further comprises a locking mechanism including a round bearing surface, with a recessed region, coaxial and connected to the driving shaft and a locking configuration, complementary to the round bearing surface, attached to the driven gear adjacent to the toothless gap, the locking mechanism defining a locking position in which the round bearing surface engages with the locking configuration when the driving mechanism is in the unengaged position, preventing rotation of the driven gear, and an unlocking position in which the locking configuration faces the recessed region of the round bearing surface when the driving mechanism is in the unengaged position allowing rotation of the driven gear.

In accordance with the present invention, the at least one actuation mechanism further comprises a pushing mechanism comprising at least one pusher, connected to the driving shaft, and a pusher engagement configuration complementary to the pusher and connected to the driven gear adjacent to the toothless gap, the pushing mechanism being configured to engage the pusher engagement configuration with the pusher, pushing, i.e. driving, the driving mechanism from the unengaged position to the engaged position.

According to the present invention, the locking configuration comprises two locking pins which are configured to, in the locking position of the locking mechanism, prevent movement of the driven gear by interfering with a portion of the round bearing surface located between them; and the pusher engagement configuration is located in a plane containing the first axis, and passing between the two locking pins.

According to the present invention, each locking pin may define a longitudinal axis thereof, and the pusher engagement configuration may be located in a plane containing the first axis, and being perpendicular to an interaxis of the longitudinal axes of the locking pins, in other words, the pusher engagement configuration may be located in a plane containing the first axis and the midpoint of the interaxis of the longitudinal axes of the locking pins.

According to the present invention, the pusher engagement configuration may comprise at least one auxiliar gear tooth arranged in a plane parallel and adjacent to the toothless gap and the pinion gear may comprise a first group of teeth having a first face width such that they only engage the gear teeth of the driven gear and a second group of teeth having a second face width, such that they engage with the gear teeth of the driven gear and the at least one auxiliar gear tooth; said second face width being greater than the first one. The second group of teeth may comprise two or more teeth. Said two or more teeth may be consecutive or non-consecutive.

In accordance with the present invention, wherein the gear teeth of the driven gear proximal to the toothless gap may be smaller than the rest of gear teeth of the driven gear. Said gear teeth of the driven gear proximal to the toothless gap may have a smaller tooth thickness and/or a smaller tooth depth.

In accordance with the present invention, the pusher engagement configuration may comprise a protrusion for interfering with the pusher, said protrusion being located in the plane containing the first axis, and passing between the two locking pins or in the plane containing the first axis, and being perpendicular to the interaxis of the longitudinal axes of the locking pins.

According to the present invention, the pusher may comprise a pushing pin.

According to the present invention, the protrusion of the pusher engagement configuration may be comprised in an engagement plate attached to the driven gear. Alternatively, the protrusion of the pusher engagement configuration may be directly attached to the driven gear.

In accordance with the present invention, the engagement plate may be attached to the driven gear by the two locking pins, and in particular, the engagement plate may be attached to the driven gear by the distal end of the two locking pins.

According to the present invention, the recessed region of the round bearing surface may define a lever and at least one of the two locking pins may define a follower of said lever, the lever being configured to push the follower to the locking position of the locking mechanism while the driving mechanism is in the unengaged position.

In accordance with the present invention, the at least one pusher may be perpendicular to the driving shaft. This configuration is preferred as it reduces the mechanical stress that it has to sustain, but other configurations are also possible.

According to the present invention, the round bearing surface may have an external diameter larger than the outside diameter of the pinion gear, a portion of the round bearing surface being adjacent to a lateral surface of the driven gear supporting the two locking pins.

In accordance with the present invention, the recessed region may have an external diameter larger than the outside diameter of the pinion gear, a portion of the recessed region being adjacent to the lateral surface of the driven gear.

According to the present invention, the pusher may protrude from an outer edge of a pushing plate, a portion of the pushing plate laterally facing a lateral surface of the driven gear supporting the pusher engagement configuration and adjacent thereto.

In accordance with the present invention, the locking mechanism and the pushing mechanism may be on opposed sides of the driven gear; or may be on the same side of the driven gear.

According to the present invention, at least one of the two locking pins may be rotatable around a longitudinal axis thereof parallel to the first axis. Rotatable locking pins reduce friction between the locking pin and the round bearing surface, and although they are advantageous, at least one of the two locking pins may not be rotatable, i.e., may have a fixed angular position.

In accordance with the present invention, the panels may be supported on a set of parallel legs, successive along the first axis; and each actuation mechanism may be attached to one of the legs of the set of parallel legs.

According to the present invention, each leg may comprise two inclined struts connected to each other, directly or via an intermediate element, at its upper end. Preferably, the connection of the two inclined struts at the upper end thereof is coaxial with the first axis.

In accordance with the present invention, the driving shaft may be attached to one of the inclined struts and/or may be held between the two inclined struts of each leg of the set of parallel legs.

According to the present invention, the two inclined struts may be coplanar, and the driven gear may pass through openings defined in said two inclined struts.

In accordance with the present invention, the two inclined struts may be arranged in corresponding parallel planes perpendicular to the first axis, and the driven gear may pass between the two inclined struts, being housed between said two parallel planes.

According to the present invention, each leg may further comprise at least one reinforcing strut interconnecting the two inclined struts.

In accordance with the present invention, the driving mechanism may be a double driving mechanism comprising two parallel and spaced driven gears connected to each other, each associated with one of two parallel and spaced pinion gears connected to the driving shaft.

According to the present invention, in case of a double driving mechanism, each driven gear may comprise at least one toothless gap forming at least one pair of aligned and mutually opposing toothless gaps.

According to the present invention, the two parallel and spaced driven gears and the two parallel and spaced pinion gears may be symmetric. Although a symmetric configuration is preferred, as it optimizes the mechanical stress that the pinion gears and driven gears have to withstand, an asymmetric configuration is also possible.

In accordance with the present invention, the panels may be attached to supports connected to the ends of each driven gear. However, the panels may also be attached to a corresponding driven gear in a different manner.

According to the present invention, the pinion gear, the locking mechanism and the pushing mechanism may be a single part attached to the driving shaft. This provides a reduction of costs.

According to the present invention, the system may be configured for rotatably driving and locking solar panels and the driving mechanism may be connected to a set of solar panels. In such case, the system defines a solar tracker. However, the system according to the present invention may also be used for rotatably drive and lock other kinds of panels, such as windows, doors, closures, etc. of greenhouses, for example.

In accordance with the present invention, the driven gear may be a gear rack comprising linear gear teeth, i.e., linearly arranged gear teeth, or an arc gear being coaxial with the first axis and comprising arc gear teeth, i.e. gear teeth arranged in an arcuate manner.

In the present document, interaxis is understood as the distance between two parallel axes.

In this document, face width of a gear tooth is understood as the length of the tooth in an axial plane, i.e., the length of the tooth in an axis parallel to the shaft driving the gear.

It is understood, in this document, that a toothless gap in a gear is a gap having no teeth in a plane coplanar with a central plane of the gear teeth of the gear.

In the present document, "include, comprise, contain, etc." are used as synonyms and do not exclude additional, unrecited elements or steps. On the other hand, the wording "consists of" excludes additional, unrecited elements or steps.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a perspective view of a first exemplary embodiment of a system for rotatably driving and locking panels according to the present invention.
FIG. 2 shows a perspective view of an actuation mechanism and corresponding parallel legs of the first exemplary embodiment shown in FIG. 1.
FIG. 3 shows a perspective detail view of an actuation mechanism of the first exemplary embodiment shown in FIGS. 1 and 2.
FIG. 4 shows a front perspective detail view of the actuation mechanism shown in FIG. 3, partially disassembled.
FIG. 5 shows a back perspective detail view of the actuation mechanism shown in FIGS. 3 and 4, partially disassembled.
FIG. 6 shows a front detail view of the actuation mechanism shown in FIGS. 3 to 5, partially disassembled.
FIG. 7 shows a back detail view of the actuation mechanism shown in FIGS. 3 to 6, partially disassembled.
FIG. 8 shows a back detail view of the actuation mechanism shown in FIGS. 3 to 7, partially disassembled.
FIG. 9 shows a perspective view of an actuation mechanism and corresponding parallel legs of a second exemplary embodiment of a system for rotatably driving and locking panels according to the present invention.
FIG. 10 shows a side detail view of the actuation mechanism of the second exemplary embodiment shown in FIG. 9.
FIG. 11 shows a perspective detail view of the actuation mechanism of the second exemplary embodiment shown in FIGS. 9 and 10, partially disassembled.
FIG. 12 shows a section view along a longitudinal plane of the actuation mechanism of the second exemplary embodiment shown in FIGS. 9 to 11.
FIG. 13 shows a section view along a transversal plane of the actuation mechanism of the second exemplary embodiment shown in FIGS. 9 to 12.
FIG. 14 shows a perspective view of an actuation mechanism and corresponding parallel legs of a third exemplary embodiment of a system for rotatably driving and locking panels according to the present invention.
FIG. 15 shows a perspective view of an actuation mechanism and corresponding parallel legs of a fourth exemplary embodiment of a system for rotatably driving and locking panels according to the present invention.
FIG. 16 shows a side view of a fifth exemplary embodiment of a system for rotatably driving and locking panels according to the present invention.
FIG. 17 shows a back detail view of the actuation mechanism of the fifth exemplary embodiment shown in FIG. 16.
FIG. 18 shows a perspective detail view of the actuation mechanism of the fifth exemplary embodiment shown in FIGS. 16 and 17, partially disassembled.
FIG. 19 shows a perspective section view of the actuation mechanism shown in FIG. 18.
FIG. 20 shows a side view of a sixth exemplary embodiment of a system for rotatably driving and locking panels according to the present invention.
FIG. 21 shows a perspective detail view of an actuation mechanism of the sixth exemplary embodiment shown in FIG. 20, partially disassembled.
FIG. 22 shows a longitudinal section view of the actuation mechanism shown in FIG. 21.
FIG. 23 shows a perspective detail view of a driven gear of the sixth exemplary embodiment shown in FIGS. 20 to 22.
FIG. 24 shows a transversal section view of the actuation mechanism shown in FIGS. 21 and 22.
FIG. 25 shows a side detail view of the actuation mechanism shown in FIGS. 21, 22 and 24.

### Detailed Description of the Invention and of particular embodiments

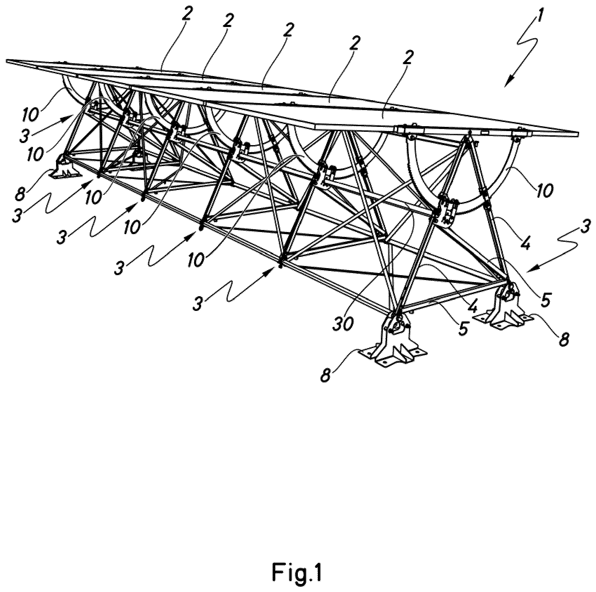

FIG. 1 shows, in a perspective view, a first exemplary embodiment of a system 1 for rotatably driving and locking panels 2 according to the present invention. This exemplary embodiment is configured to drive and lock solar panels, thereby forming a solar tracker. However, other embodiments of the present invention can be configured to drive and lock any other type of suitable panel, as for example, doors, windows, etc.

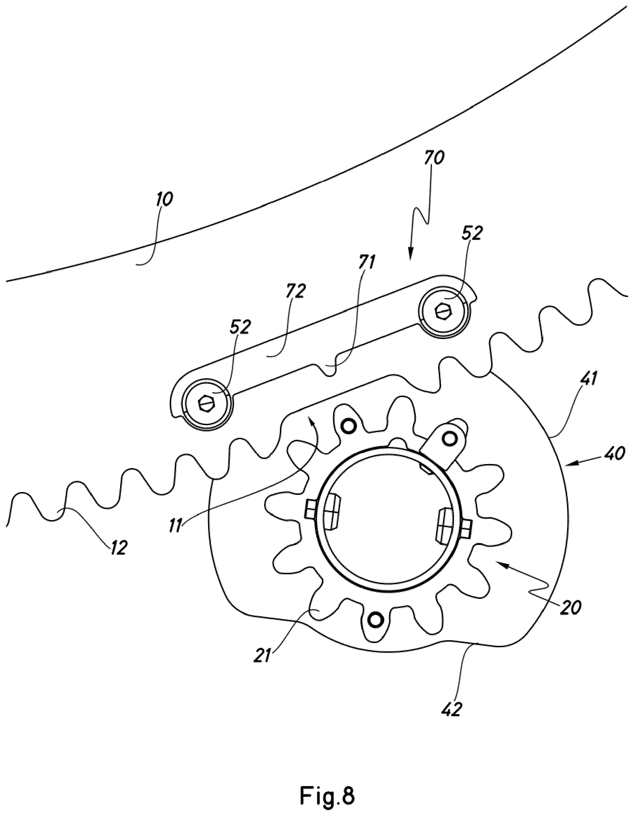

The system 1 shown comprises actuation mechanisms comprising a driving mechanism comprising a driven gear 10, having gear teeth 12 and at least one toothless gap 11 (see, for example, FIG. 8) coaxial and rotative around a first axis and connected to a set of panels 2, and a pinion gear 20 comprising pinion gear teeth 21 (see, for example, FIG. 8), coaxial and connected to a driving shaft 30 parallel to the first axis, the driving mechanism defining an engaged position in which the pinion gear 20 is engaged with the driven gear 10, and an unengaged position in which some teeth 21, i.e. more than one teeth 21, of the pinion gear 20 are arranged in the toothless gap 11 of the driven gear 10.

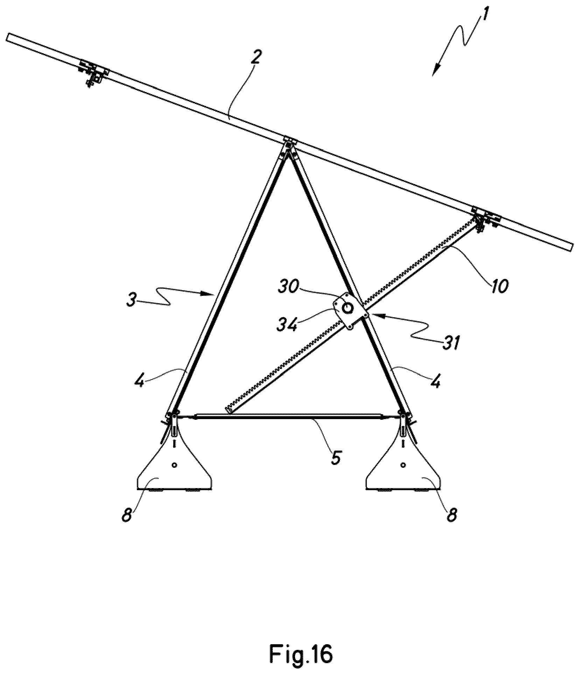

In this first exemplary embodiment, the driven gear 10 is an arc gear and the gear teeth 12 are arc gear teeth, i.e. gear teeth 12 arranged in an arcuate manner. This may be different in other embodiments as, for example, shown in FIGS. 16 to 19, wherein the driven gear 10 is a gear rack having linear gear teeth 12, i.e. having gear teeth 12 arranged linearly.

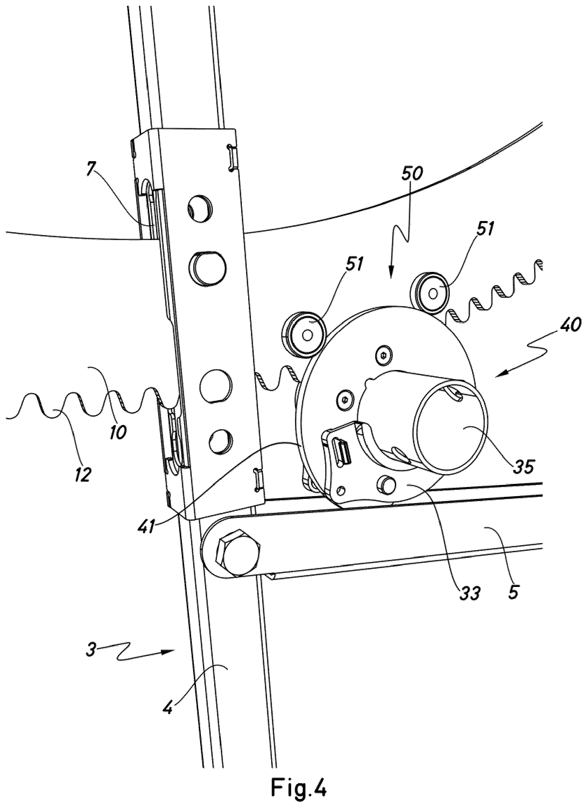

Each actuation mechanism further comprises a locking mechanism 40 comprising a round bearing surface 41 (see, for example, FIG. 4), with a recessed region 42, coaxial and connected to the driving shaft 30 and a locking configuration 50, complementary to the round bearing surface 41, attached to the driven gear 10 adjacent to the toothless gap 11. The locking mechanism 40 defines a locking position in which the round bearing surface 41 engages with the locking configuration 50 when the driving mechanism is in the unengaged position, preventing rotation of the driven gear 10, and an unlocking position in which the locking configuration 50 faces the recessed region 42 of the round bearing surface 41 when the driving mechanism is in the unengaged position allowing rotation of the driven gear 10.

By preventing or allowing rotation of the driven gear 10, rotation of the panels 2 is also prevented or allowed.

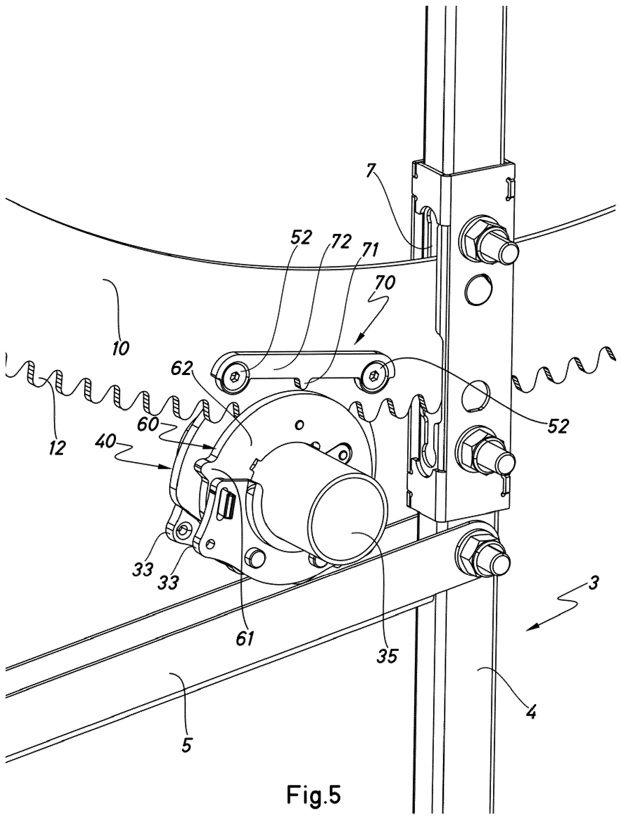

In the first exemplary embodiment, the actuation mechanism also comprises a pushing mechanism 60 comprising one pusher 61 (see, for example, FIG. 5), connected to the driving shaft 30, and a pusher engagement configuration 70 complementary to the pusher 61 and connected to the driven gear 10 adjacent to the toothless gap 11. Said pushing mechanism 60 comprises one pusher 61, although in other embodiments the pushing mechanism 60 can comprise more than one pusher 61. Said pushing mechanism 60 is configured to engage the pusher engagement configuration 70 with the pusher 61, thereby pushing, i.e. driving, the driving mechanism from the unengaged position to the engaged position.

The locking configuration 50 comprises two locking pins 51 (see, for example, FIG. 4) which are configured to, in the locking position of the locking mechanism 40, prevent movement of the driven gear 10 by interfering with a portion of the round bearing surface 41 located between them.

The pusher engagement configuration 70 (see, for example, FIG. 5) is located in a plane containing an interaxis of the two locking pins 51, that is to say, the pusher engagement configuration is located in a plane containing an axis perpendicular to the longitudinal axes of the locking pins 51.

In the exemplary embodiment shown, wherein the panels 2 are solar panels, the system 1 for rotatably driving and locking panels 2 according to the present invention provides a solar tracker. In other embodiments wherein the panels 2 are, for example, doors or windows, the system 1 allows opening and closing of such doors or windows.

In the exemplary embodiment shown in FIG. 1, the system 1 comprises a set of parallel legs 3 for supporting the pivoting panels 2, said set of parallel legs 3 being successive along the first axis, i.e. the axis of rotation of the driven gear 10. In this exemplary embodiment, one of the legs 3 of each member of the set of parallel legs 3 supports a corresponding actuation mechanism. However, in other embodiments, is it possible that certain parallel legs 3 do not support a corresponding actuation mechanism, that is to say, is it possible that a system 1 can comprise less actuation mechanisms than sets of parallel legs 3.

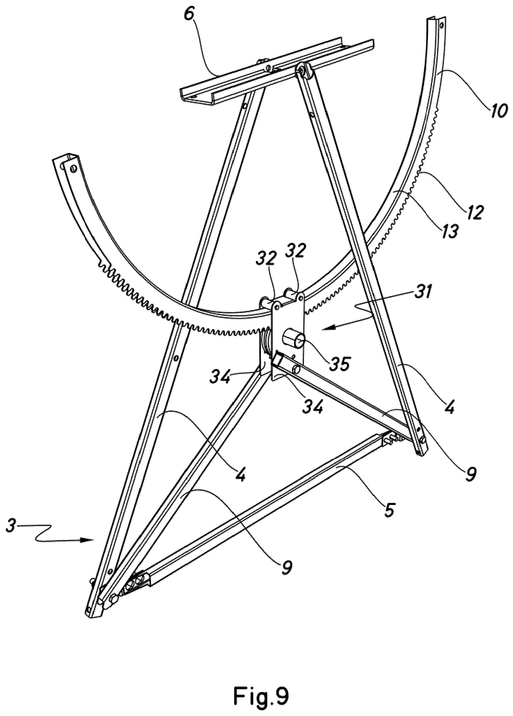

In the embodiment shown, each leg 3 comprises two inclined struts 4 connected to each other at its upper end. Said upper connection can be made directly or via an intermediate element between the two inclined struts 4. Said intermediate element, can be, for example, a support 6 of panels 2, as, for example, in the third exemplary embodiment shown in FIG. 9.

In order to improve the structural integrity of the system, the exemplary embodiment shown in FIG. 1 comprises reinforcing struts 5 interconnecting inclined struts 4. However, said reinforcing struts 5 are optional and other embodiments may lack them.

In the depicted exemplary embodiment, the legs 3 at the longitudinal ends of the system 1 comprise anchoring units 8 for anchoring the system 1 to the ground or any other suitable supporting surface. However, in other embodiments this may differ.

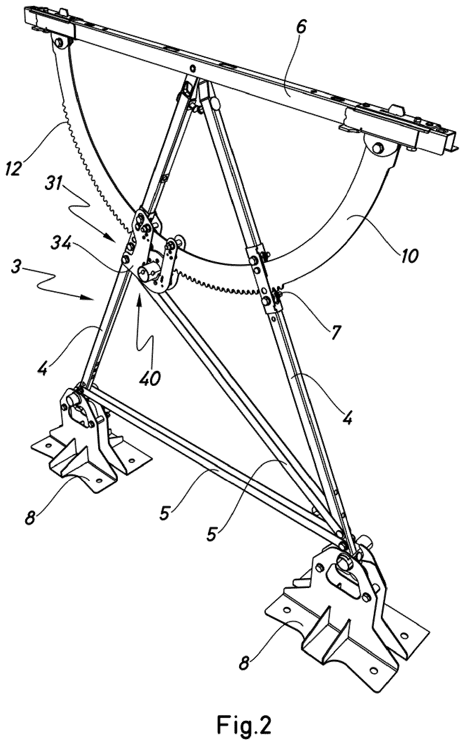

The legs 3 of the first exemplary embodiment shown in FIG. 1 can be seen in greater detail in the perspective view of FIG. 2, wherein a leg 3 of the longitudinal ends of the system 1 is depicted. The leg 3, and in particular, its inclined struts 4 are articulately linked to the anchoring units 8. In the case shown, the leg 3 comprises two reinforcing struts 5, one interconnecting the lower ends of the inclined struts 4 and another one interconnecting the lower end of one inclined strut 4 with the midpoint of the opposite inclined strut 4.

In this exemplary embodiment, the inclined struts 4, as well as the reinforcing struts 5, are substantially coplanar, although in other embodiments this may differ.

Attached in an articulated manner at the upper end of the inclined struts 4, the leg 3 shown comprises a support 6 for the panels 2. The point of articulation between the inclined struts 4 and the support 6 defines the first axis of the system 1. In other embodiments, the panels 2 may be attached to the legs 3 in a different manner, for example, using clamps or other attaching elements placed at the ends of the driven gear 10.

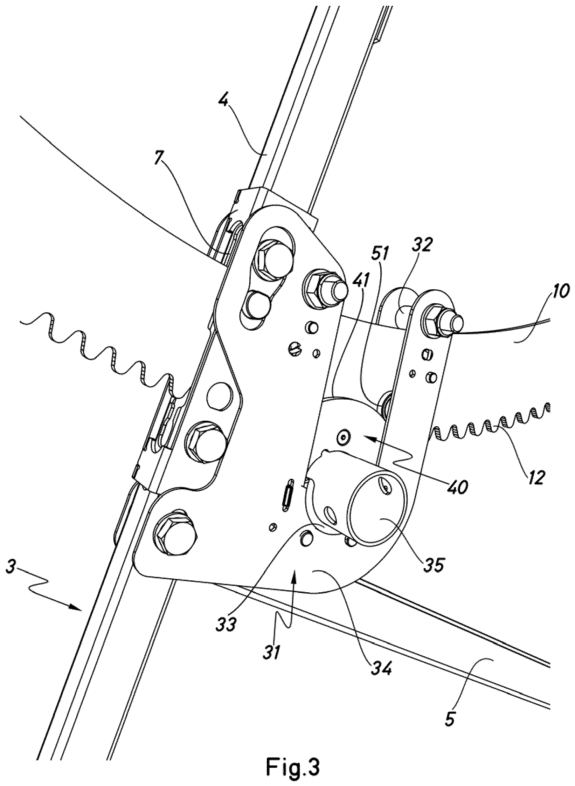

As can be seen more clearly in the detail perspective view of FIG. 3, in this first exemplary embodiment the driven gear 10 passes through openings 7 defined in the inclined struts 4, thus providing a compact arrangement.

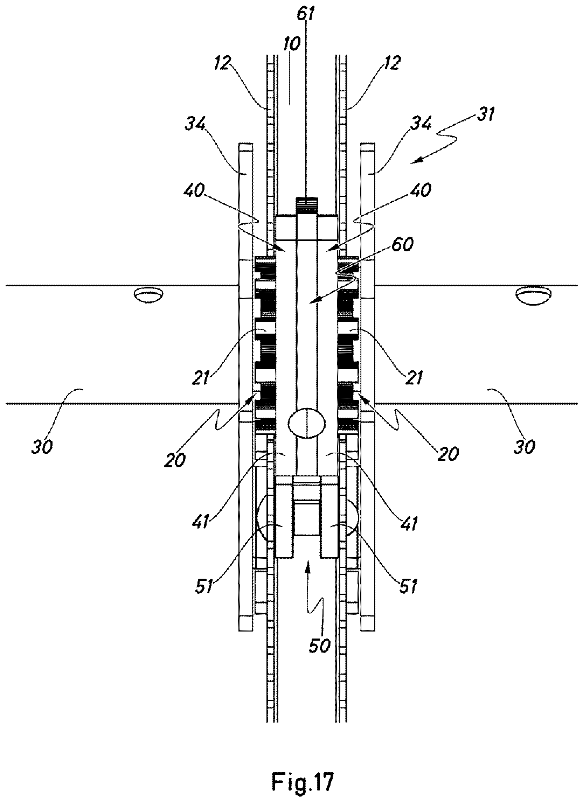

FIG. 3 also shows a support 31 attached to one of the inclined struts 4 that supports the driving shaft 30 (not shown in this drawing for clarity purposes, see FIG. 1) and the locking mechanism 40, the pushing mechanism 60 and the pinion gear 20, which are connected to it, so that they move together. The driving shaft 30 is driven by at least one motor (not shown). In this embodiment, the driving shaft 30 is housed in a housing 35 to which the locking mechanism 40 is attached, preferably by removable attaching means, as for example, screws. The pushing mechanism 60 and the pinion gear 20 are also preferably fixed to the driving shaft 30 using removable attaching means, although non-removable attaching means, for example, welding, are also possible. In the exemplary embodiment shown, the pushing mechanism 60 and the pinion gear 20 are also fixed to the housing 35, which in turn is fixed to the driving shaft 30. However, other embodiments may lack such housing 35 and the pinion gear 20, locking mechanism 40 and pushing mechanism 50 may be directly fixed to the driving shaft 30 (see, for example, FIGS. 17 to 19).

In this exemplary embodiment, the support 31 comprises two plates 34 linked together and attached to both lateral sides of the inclined strut 4. In particular, in this embodiment the two plates 34 are linked together by a pair of upper rollers 32 (in FIG. 3 one of the rollers is hidden behind one of the plates 34 of the support 31) that guide the movement of the driven gear 10. Other embodiments may comprise a different number of rollers 32, or even lack them. In other embodiments the support 31 may be different than the one shown in FIG. 3 and/or may be attached in a different manner to the inclined strut 4, or even may be attached to a reinforcing strut 5 instead of an inclined strut 4.

Partially hidden by one of the plates 34 of the support 31, in FIG. 3 can be partially seen one of the locking pins 51 of the locking configuration 50, which is shown in greater detail in FIG. 4, as it shows a front perspective detail view of the actuation mechanism shown in FIG. 3, but partially disassembled, in particular, without the plates 34 of the support 31 and rollers 32, so that the locking mechanism 40 and locking configuration 50 can be seen. Although the plates 34 of the support 31 have not been depicted in FIG. 4, a bushing 33 that receives the locking mechanism 40 has been depicted. Said bushing 33 is comprised in the support 31 and is attached to the plates 34 previously shown in FIG. 3.

In FIG. 4 the driving mechanism is depicted in the unengaged position in which one or more teeth 21 of the pinion gear 20 are arranged in the toothless gap 11 of the driven gear 10 (see FIG. 8) and the locking mechanism 40 is in the locking position in which the locking pins 51 of the locking configuration 50 interfere with the round bearing surface 41, and in particular, with a portion of the round bearing surface 41 located between them, so that movement of the driven gear 10 is prevented. This position can also be referred to as stow position in which the force received by the panels, for example, by wind, is not transmitted to the driving mechanism, thereby avoiding damage thereof. In order to adjust the angular position of the panels 2 (see, for example, FIG. 1) in the aforementioned stow position, the angular position of the locking configuration 50 and the toothless gap 11 of the driven gear 10 can be adjusted. Although in the embodiment shown the driven gear 10 comprises a single toothless gap 11 and a single locking configuration 50, other embodiments of the system 1 object of the present invention can comprise driven gears 10 with more than one toothless gap 11 and more than one locking configuration 50.

In the exemplary embodiment shown the locking pins 51 are rotatable, so that they can be considered locking rollers, around a longitudinal axis thereof, said longitudinal axes being parallel to the first axis around which the driven gear 10 rotates. Rotatable locking pins 51 reduce the friction between the locking pins 51 and the round bearing surface 41. However, in other embodiments the locking pins 51 may not be rotatable or only one of them may be rotatable and the other not.

FIG. 5 shows a back perspective detail view of the actuation mechanism shown in FIGS. 3 and 4, partially disassembled, in particular, with the support 31 partially disassembled so that it does not hide elements behind it, and in particular, so that it does not hide the pusher engagement configuration 70 and the pushing mechanism 60. In FIG. 5, as in FIG. 4, the actuation mechanism is in the previously described stow position. As stated before, in this position the pinion gear 20 is in an unengaged position in which some teeth 21 of the pinion gear 20 are placed in the toothless gap 11 of the driven gear 10 (see FIG. 8). Therefore, in this position by turning the pinion gear 20 with the driving shaft 30 the teeth 21 of the pinion gear 20 would not intermesh with the teeth 12 of the driven gear 10 and, consequently, the pinion gear 20 would not drive the driven gear 10. In order to overcome this problem, the actuation mechanism of a system 1 according to the present invention comprises a pushing mechanism 60 and a pusher engagement configuration 70, wherein the pushing mechanism 60 is configured to interfere with the pusher engagement configuration 70 to drive the driving mechanism from the unengaged position to the engaged position in which the driven gear 10 can be rotated by turning the pinion gear 20 which moves together with the driving shaft 30.

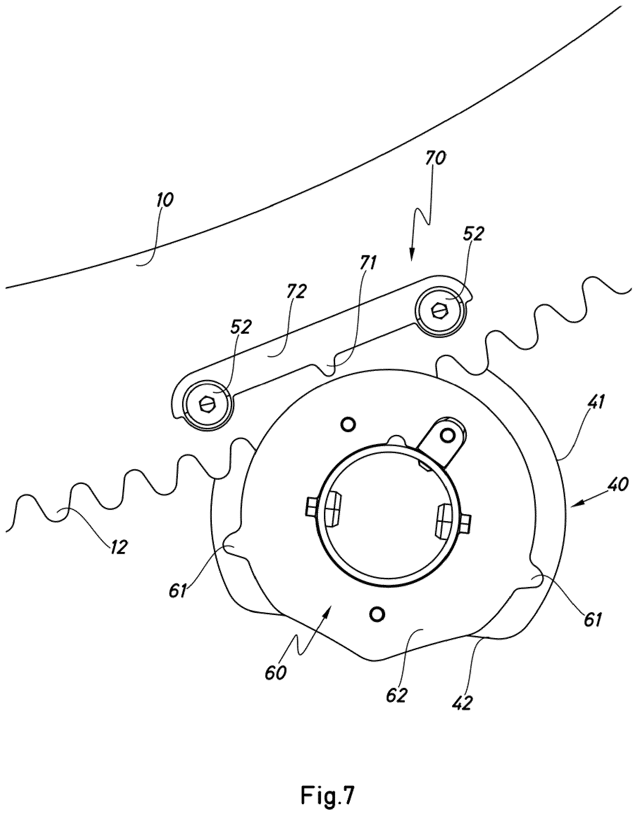

The geometry of the pushing mechanism 60 and of the pusher engagement configuration 70 of this first exemplary embodiment will be described in greater detail in the context of FIG. 7 (see below).

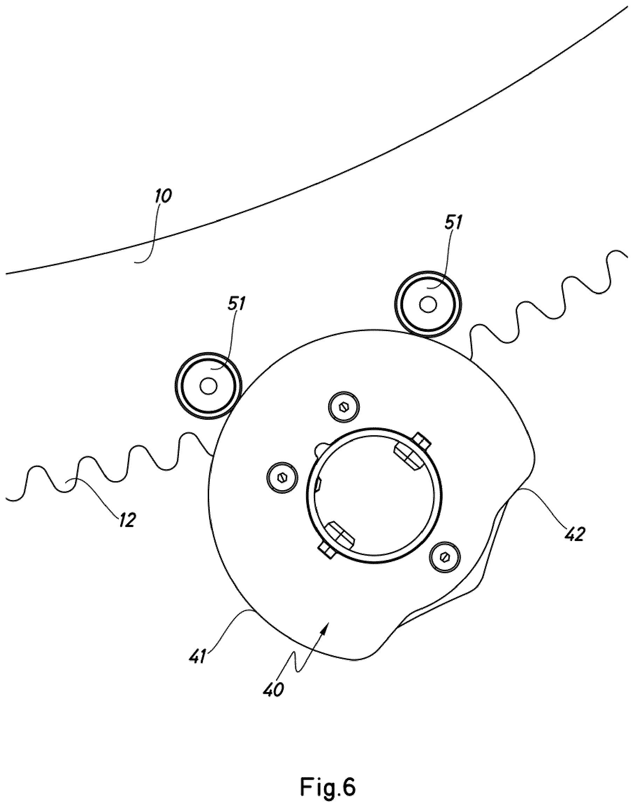

In FIG. 6 can be seen a front view of the actuation mechanism of the first exemplary embodiment previously shown in FIGS. 3 to 5. In FIG. 6 the actuation mechanism is depicted partially disassembled so that the shape of the locking mechanism 40 can clearly be seen. As shown, in this embodiment the locking mechanism 40 comprises a round bearing surface 41 and a recessed region 42. As previously described, the round bearing surface 41 is the one that interferes with the locking pins 51 in the stow position thereby preventing movement of the driven gear 10. The recessed region 42 allows that by rotating the locking mechanism 40, the mechanical interference between the locking pins 51 and said locking mechanism 40, in particular, with the round bearing surface 41, comes to an end thereby allowing movement of the driven gear 10.

By having two locking pins 51, movement of the driven gear 10 is prevented in clockwise and counterclockwise direction as one of the two acts as a stop in the clockwise direction and the other acts as a stop in the counterclockwise direction. In particular, as seen in FIG. 6, the locking pin 51 on the right prevents movement of the driven gear 10 in a clockwise direction and the locking pin 51 on the left prevents movement of the driven gear 10 in a counterclockwise direction. Although prevention of movement in both directions is preferred, in applications wherein prevention of movement is required in only one direction, only one locking pin would suffice.

It can be stated that, in this exemplary embodiment, the recessed region 42 of the round bearing surface 41 defines a lever and the locking pins 51 define a follower of said lever, the lever being configured to push the follower to the locking position of the locking mechanism while the driving mechanism is in the unengaged position.

In this exemplary embodiment, each locking pin 51 defines a longitudinal axis thereof, and thereby an interaxis is defined between both longitudinal axes.

FIG. 7 shows a back view of the actuation mechanism of the first exemplary embodiment previously shown in FIGS. 3 to 6. In FIG. 7 any element that could hinder the vision of the shape of the pushing mechanism 60 has been omitted for illustrative purposes. As can be appreciated in FIG. 7, in this first exemplary embodiment the pushing mechanism 60 comprises two pushers 61 protruding from the pushing plate 62, which are not diametrically opposed, that is to say, they are not separated 180 degrees. However, in other embodiments of a system 1 according to the present invention the pushing mechanism 60 may differ from the one shown in FIG. 7, for example, by having a different number of pushers 61 or having a different separation between them. In this particular embodiment, the pushers 61 are substantially perpendicular to the axis of rotation of the pushing mechanism 60, which is coaxial with the axis of rotation of the pinion gear 20, driving shaft 30 and locking mechanism 40.

In this exemplary embodiment, the pusher engagement configuration 70 comprises an engagement plate 72 which in turn comprises a protrusion 71 for interfering with the pushers 61 of the pushing mechanism 60 in order to drive the driving mechanism from the unengaged position to the engaged position wherein the pinion gear 20 intermeshes with the driven gear 10 and is able to drive it.

Said engagement plate 72 is fixed to the driven gear 10, and in particular, to a side of the driven gear 10 by the distal ends 52 of the locking pins 51, which in this embodiment go through the driven gear 10.

In this particular embodiment, the protrusion 71 is located in a plane containing the first axis, i.e. the axis of rotation of the driven gear 10, and being perpendicular to the interaxis of the longitudinal axes of the locking pins 51 (see also FIG. 6). In other words, it can also be stated that, in this embodiment, the protrusion 71 is perpendicular to the axis of rotation of the driving shaft 30, which is coaxial with the axis of rotation of the pushing mechanism 60. In other embodiments this arrangement may be different.

The back view of FIG. 7 depicts that, in this embodiment, the external diameter of the round bearing surface 41 is larger than the one of the pushing mechanism 60, as well as larger than the pinion gear 20 (see FIG. 8), which in FIG. 7 is hidden behind the pushing mechanism 60. This configuration prevents lateral disengagement of the pinion gear 20 from the driven gear 10.

FIG. 8 shows a back detail view of the actuation mechanism shown in FIGS. 3 to 7, partially disassembled, so that the pusher engagement configuration 70 and the pinion gear 20 of this exemplary embodiment can be clearly appreciated. As in FIGS. 1 to 7, in FIG. 8 the actuation mechanism is depicted in the stow or unengaged position in which some teeth 21 of the pinion gear 20 are arranged in the toothless gap 11 of the driven gear 10, in other words, in which the pinion gear 20 is not engaged with the driven gear 10. In this position, movement of the driven gear 10 is prevented by the locking pins 50 interfering with a portion of the round bearing surface 41 (see FIG. 6). In this stow position, loads of the system 1 for rotatably driving and locking panels 2 object of the present invention are transmitted to its supporting structure, namely inclined struts 4, reinforcing struts 5, anchoring units 8, auxiliar struts 9, etc., instead of to the pinion gear 20 that could result in a mechanical stress transmitted to the driving shaft 30 that could damage the at least one driving motor that drives it.

As in the depicted stow position the pinion gear 20 is not engaged with the driven gear 10, and in particular, no teeth 21 of the pinion gear 20 are engaged with any teeth 12 of the driven gear 10, it is no longer possible to rotate the driven gear 10 simply by turning the pinion gear 20 with the driving shaft 30 (see FIG. 1). In order to solve this problem, and be able to drive the driving mechanism to the engaged position in which is able to drive the driven gear 10 so that the panels 2 can be rotated, the actuation mechanism comprises the pushing mechanism 60 (see, for example, FIG. 7), which has been previously described.

In the first exemplary embodiment of a system 1 according to the present invention shown in FIS. 1 to 7, the locking configuration 50 and the locking mechanism 40 are located on one side of the driven gear 10 and the pushing mechanism 60 and the pusher engagement configuration 70 are located on the opposite side of the driven gear 10. However, other embodiments of a system 1 according to the present invention can have different configurations and, for example, the locking mechanism 40, the locking configuration 50, the pushing mechanism 60 and the pusher engagement configuration 70 can be all on the same side of the driven gear 10.

As in this exemplary embodiment the round bearing surface 41 of the locking mechanism 40 and the pushing mechanism 60 have a diameter larger than the outside diameter of the pinion gear 20, a portion of the proximal, or lateral, surface of the locking mechanism 40 faces a portion of the lateral surface of the driven gear 10, and a portion of the proximal, or lateral, surface of the pushing mechanism 60 faces a portion of the lateral surface of the driven gear 10, both the locking mechanism 40 and the pushing mechanism 60 prevent a movement of the driven gear 10 along the first axis, i.e. a lateral movement of the driven gear 10, that could laterally disengage the driven gear 10 from the pinion gear 20.

Other embodiments of the system 1 object of the present invention, including different configurations of the driven gear 10, the pinon gear 20, the locking mechanism 40, the locking configuration 50, the pushing mechanism 60 and/or the pusher engagement configuration 70 are shown in FIGS. 9 to 25.

FIG. 9 shows a perspective view of an actuation mechanism and corresponding parallel legs 3 of a second exemplary embodiment of a system 1 for rotatably driving and locking panels 2 according to the present invention. A difference between this second exemplary embodiment and the first exemplary embodiment shown in FIGS. 1 to 8 is that the driving mechanism is a double driving mechanism comprising two parallel and spaced driven gears 10 connected to each other. In this embodiment both driven gears 10 are connected by its upper, or inner as seen radially, end. Such double driving mechanism can also be used, in other embodiments, in combination with parallel legs 3 comprising two coplanar inclined struts 4, wherein the double driven gear 10 passes through openings 7 in said inclined struts, similar to the first exemplary embodiment shown in FIGS. 1 to 8.

A further difference of this second exemplary embodiment to the first one shown in FIGS. 1 to 8 is the arrangement of the legs 3 that comprise two inclined struts 4 arranged in corresponding parallel planes perpendicular to the first axis, with the double driven gear 10 passing between the two inclined struts 4. Such configuration of the legs 3 is also applicable, for example, in embodiments having a single driven gear 10 as in the first exemplary embodiment. In contrast with the ones of this second exemplary embodiment, the legs 3 of the first exemplary embodiment comprise two inclined struts 4 that are coplanar and the driven gear 10 passes through openings defined in said two inclined struts 4.

In the second exemplary embodiment, the two inclined struts 4 together with a lower reinforcing strut 5 define an isosceles triangle and the support 31 is held at the perpendicular bisector of the base of such isosceles triangle by two auxiliar struts 9 that are connected at one end to one of the inclined struts 4 and to the support 31 at the other end.

In order to guide the movement of the driven gear 10, while minimizing the friction introduced by such guidance, the support 31 of this second exemplary embodiment comprises two rollers 32 arranged at the upper end thereof and in contact with the connecting surface 13 of the double driven gear 10.

The actuation mechanism shown comprises, at its upper part, a support 6 of the panels 2. In the case shown, this support 6 is configured for receiving perimeter frames of photovoltaic panels, although in other embodiments such support 6 can be configured for receiving any other kind of suitable panel 2. Besides supporting the panel 2, said support 6 also connects the inclined struts 4 at their upper ends. In other embodiments the panels 2 may also be attached to the driven gear 10 in a different manner.

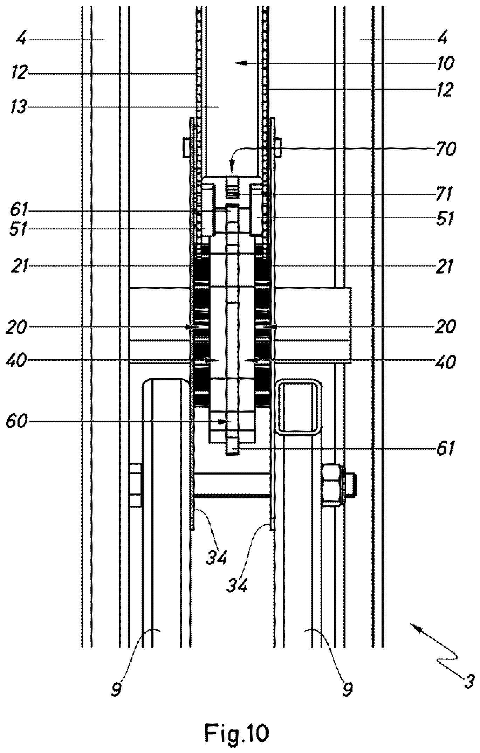

The actuation mechanism of the second exemplary embodiment of a system 1 according to the present invention can be seen in greater detail in the side view of FIG. 10, that shows the double driven gear 10 having two sets of gear teeth 12, each set of gear teeth 12 engaging a corresponding pinion gear 20 having teeth 21 that intermesh with the corresponding gear teeth 12. Said pinion gears 20 are arranged underneath the corresponding set of gear teeth 12. In this exemplary embodiment, the double driven gear 10 is a double arc gear comprising two sets of arc gear teeth 12.

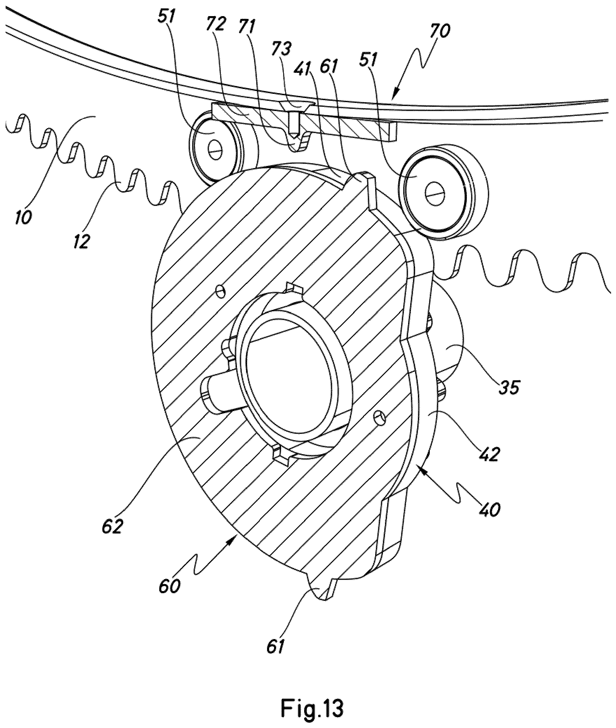

On the inner side of the driven gear 10 are arranged two pairs of locking pins 51, each pair on a corresponding driven gear 10. Each pair of locking pins 51 is configured to, in the locking position of a corresponding locking mechanism 40, prevent movement of the driven gear 10 by interfering with a portion of the round bearing surface 41 located between them (see Fig. 13). Each pair of locking pins 51 and the toothless gap 11 of the corresponding driven gear 10 are arranged so that the toothless gap 11 is centred between the locking pins 51.

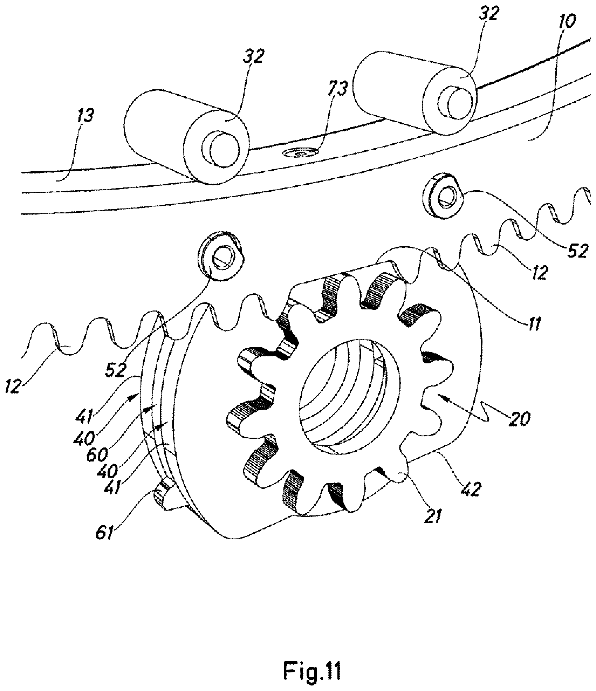

In a midplane between the two sets of arc gear teeth 12, this second exemplary embodiment comprises a pushing mechanism 60 having two pushers 61 protruding from an outer edge of a pushing plate 62 (for greater detail see FIG. 13). Said pushers 61 are configured to interfere with a pusher engagement configuration 70 also located in said midplane. In particular, said pusher engagement configuration 70 is attached to the inner side of the connecting surface 13 of the double driven gear 10 (see FIGS. 11 to 13 for greater detail).

In this exemplary embodiment, between the two pinion gears 20 and the single pushing mechanism 60, there are located two locking mechanisms 40, one at each side of the pushing mechanism 60.

Although most elements depicted in FIG. 10 are symmetric, in other similar embodiments such elements may be arranged asymmetrically.

FIG. 11 shows a perspective detail view of the actuation mechanism of the second exemplary embodiment previously shown in FIGS. 9 to 10, partially disassembled so that components that otherwise would be hidden can be seen. Among others, in FIG. 11 representation of the plates 34 of the support 31, as well as the housing 35 of the driving shaft 30 has been omitted.

In FIG. 11 the actuation mechanism is in the stow position as some teeth 21 of the pinion gear 20 are arranged in the corresponding toothless gap 11 of the double driven gear 10, that is to say, the pinion gears 20 are disengaged from the double driven gear 10. As this exemplary embodiment comprises a double driven gear 10, said double driven gear 10 comprises two opposed and aligned toothless gaps 11, although in FIG. 11 one is hidden due to the perspective used.

As in the first exemplary embodiment described in FIGS. 1 to 8 having a single driven gear 10, in this second exemplary embodiment the driving mechanism moves from the unengaged position represented in FIG. 11 to the engaged position by engaging the pusher engagement configuration 70, and in particular, by engaging the protrusion 71 of the pusher engagement configuration, with one of the pushers 61 of the pushing mechanism 60.

The pusher engagement configuration 70 is fixed to the inner side of the connecting surface 13 of the double driven gear 10 by a fixing element 73, which in the embodiment shown is a screw, although in other embodiments may be a different element.

FIG. 11 also depicts the pair of rollers 32, being in contact with the external surface of the connecting surface 13 and guiding the movement of the double driven gear 10. Other embodiments can comprise static guiding elements instead of the rollers 32, and/or may comprise a different number of such elements, even none of them.

The rollers 32, together with the toothless gap 11 and the locking pins 51, in this exemplary embodiment, are arranged in a substantially symmetrical manner.

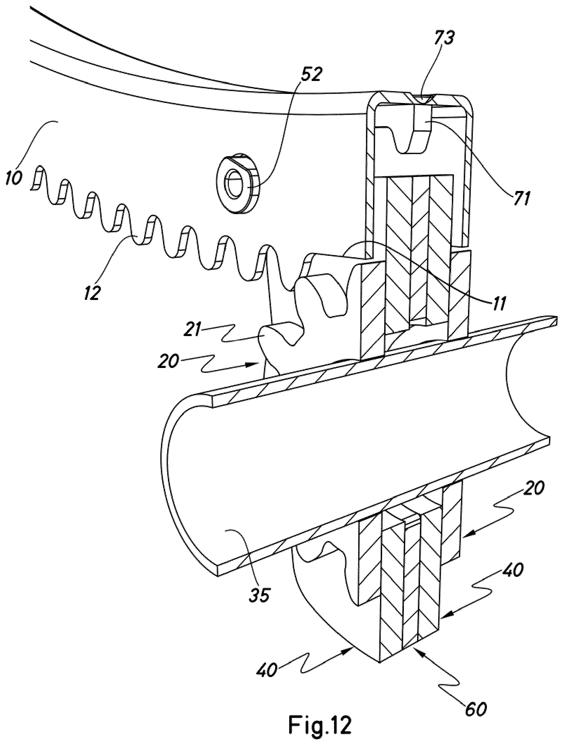

FIG. 12 shows a section view along a longitudinal plane, i.e. a plane containing the first axis, of the actuation mechanism of the second exemplary embodiment shown in FIGS. 9 to 11. When compared to what has been illustrated in FIG. 11, in FIG. 12 the rollers 32 have been omitted, but the housing 35 of the driving shaft 30 (not shown) has been illustrated. As previously stated in the context of the first exemplary embodiment, other embodiment may lack such housing 35 and, thus, other embodiments may have the pinion gear 20, locking mechanism 40 and pushing mechanism 50 directly fixed to the driving shaft 30.

As can be seen, the external diameter of the two locking mechanisms 40 and of the pushing mechanism 60 is greater the outside diameter of the pinion gears 20. In this embodiment, guiding of the double driven gear 10 is also achieved by the U-shaped double driven gear 10 facing lateral sides of the locking mechanisms 40, thereby preventing lateral disengagement of the double driven gear 10 from the pinion gears 20.

FIG. 13 shows a section view along a transversal plane, i.e. a plane perpendicular to the first axis, of the actuation mechanism of the second exemplary embodiment shown in FIS. 9 to 12. Representation of certain elements has been omitted for illustrative purposes. This section view allows to see the interaction of two locking pins 51 with the round bearing surface 41 of the corresponding locking mechanism 40 when it is in the locking or stow position.

In a plane parallel to the side of the driven gear 10 and to the locking pins 51, this exemplary embodiment comprises its pushing mechanism 60 and the corresponding pusher engagement configuration 70. Said pusher engagement configuration 70 comprises an engagement plate 72 attached to the driven gear 10, in particular, to the inner side of its connecting surface 13, by a fixing element 73, which in this case is a screw. In other embodiments other fastening means can be used, either permanent (for example, welding) or non-permanent. Said engagement plate 72 comprises a protrusion 71 for interfering with one of the pushers 61 of the pushing mechanism 60 located in the same plane perpendicular to the first axis.

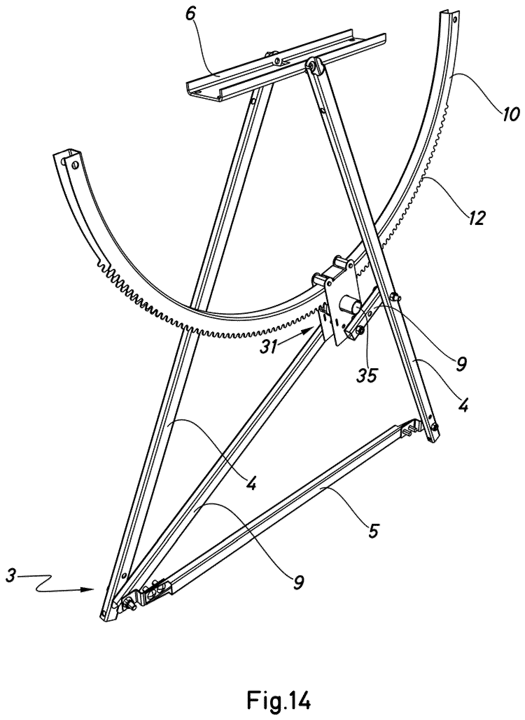

FIG. 14 shows a perspective view of an actuation mechanism and corresponding parallel legs 3 of a third exemplary embodiment of a system 1 for rotatably driving and locking panels 2 according to the present invention. This third embodiment is substantially similar to the second one shown in FIGS. 9 to 12 as they both share substantially the same actuation mechanism, including the double driven gear 10. Consequently, the description of the actuation mechanism of the second embodiment is also applicable to the third one.

The third exemplary embodiment shown differs from the second one, mainly, in the structure that supports it, and in particular, in the structure supporting the support 31 and the elements supported thereby (pinion gears 20, locking mechanisms 40, pushing mechanism 60, locking configuration 50, etc). In particular in the third exemplary embodiment the support 31 is held close to one of the inclined struts 4 supported by the auxiliar struts 9. More precisely, the support 31 is held inside the triangle defined by the inclined struts 4 and the reinforcing strut 5 and close, but not adjacent, to the proximal inclined strut 4.

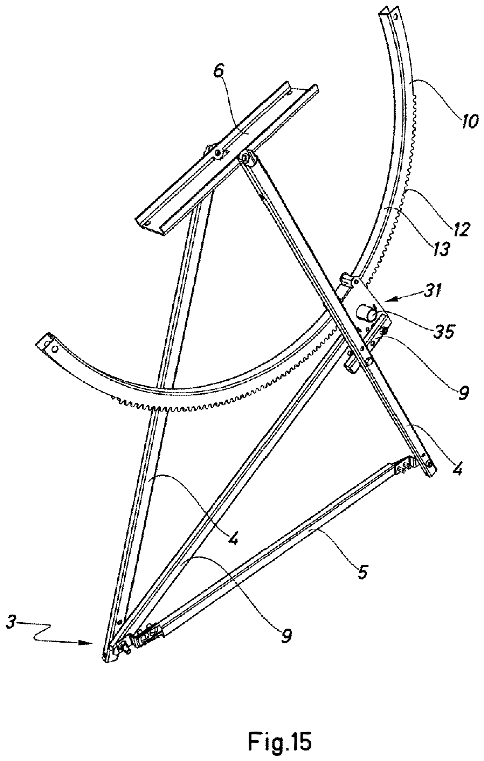

FIG. 15 shows a perspective view of an actuation mechanism and corresponding parallel legs 3 of a fourth exemplary embodiment of a system 1 for rotatably driving and locking panels 2 according to the present invention. This fourth exemplary embodiment is substantially similar to the third one, differing in the location of the support 31. Contrary to the third exemplary embodiment shown in FIG. 14, in this fourth exemplary embodiment the support 31, and the elements supported by it, is located outside the triangle defined by the inclined struts 4 and reinforcing strut 5, adjacent to its proximal inclined strut 4.

Neither the third, nor the fourth, exemplary embodiments comprise anchoring units 8 although other embodiments having similar configurations could have such elements.

FIG. 16 shows a side view of a fifth exemplary embodiment of a system 1 for rotatably driving and locking panels according to the present invention. Contrary to the exemplary embodiments previously shown, this fifth exemplary embodiment comprises a gear rack as driven gear 10, that is to say, in this fifth exemplary embodiment the driven gear 10 is straight instead of arc shaped. Likewise, the gear teeth 12 of the driven gear 10 of this fifth exemplary embodiment are linear gear teeth 12, i.e. the gear teeth 12 are arranged linearly, instead of being arranged in an arcuate manner.

Despite the aforementioned differences in the shape of the driven gear 10 and corresponding gear teeth 12, the principle of operation of this fifth exemplary embodiment, is substantially the same of the exemplary embodiments previously shown and described.

In this exemplary embodiment, the panels 2, are supported on a set of parallel legs 3 comprising two inclined struts 4 connected to each other at its upper end and connected to a reinforcing strut 5 at the corresponding lower end so that the leg 3 is shaped forming a substantially isosceles triangle. The connection at the upper end of the inclined struts 4 is colinear with the first axis around which the panels rotate.

The actuation mechanism of this fifth exemplary embodiment is attached to one of the inclined struts 4 via the support 31 that comprises a pair of plates 34 (see for greater detail, for example, FIG. 17).

The depicted leg 3 comprises a pair of anchoring units 8 for anchoring the system 1 to the ground or any other suitable supporting surface. Said anchoring units 8 are articulately linked to the inclined struts 4 and are comprised at the legs 3 of the distal ends of the system 1. However, in other embodiments, other arrangements of the anchoring units 8 are also possible. For example, intermediate legs 3 of the system 1 can also comprise corresponding anchoring units 8 or the system 1 may lack them, with the legs 3 being directly placed on the ground. However, use of anchoring units 8 is preferred as, among other benefits, increases stability of the system 1.

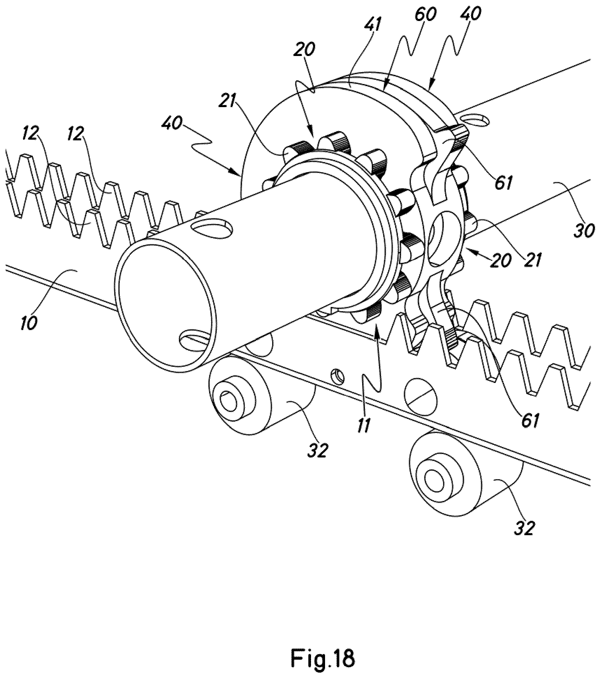

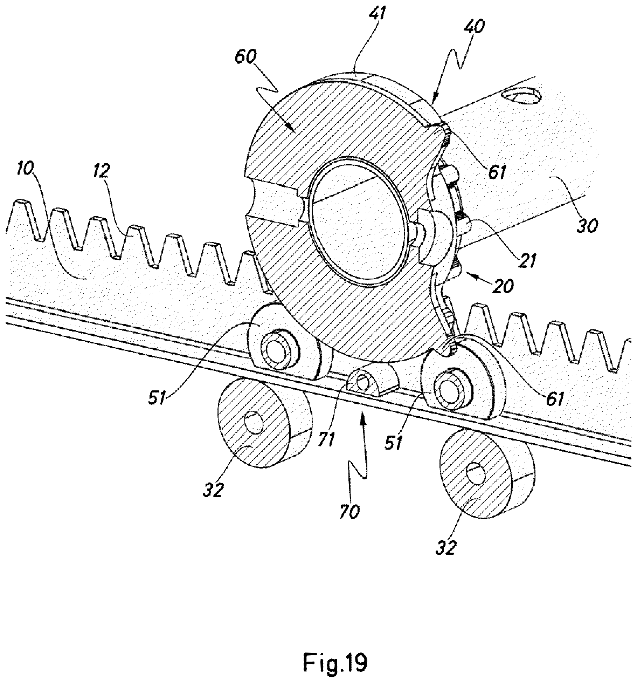

FIG. 17 depicts, in a back detail view, the actuation mechanism of the fifth exemplary embodiment previously shown in FIG. 16. As can be seen, similar to the second, third and fourth exemplary embodiments previously shown, the driving mechanism is a double driving mechanism comprising two parallel and spaced driven gears 10, each having corresponding gear teeth 12, connected to each other. As seen in greater detail in FIGS. 18 and 19, in this exemplary embodiment the driven gears 10 are connected by their lower end, thereby forming a substantially U shape.

The driving mechanism comprises, fixed to the driving shaft 30, two pinion gears 20, one for each driven gear 10, comprising pinion gear teeth 21 that intermesh with the gear teeth 12 of the corresponding driven gear 10 to drive the double driven gear 10. Adjacent to the pinion gears 20, fixed to the driving shaft 30 the actuation mechanism comprises two locking mechanisms 40. Between both locking mechanisms 40 the actuation mechanism of this fifth exemplary embodiment comprises one pushing mechanism 60.

In this exemplary embodiment, underneath the locking mechanisms 40, the locking configuration 50 of the actuation mechanism comprises two pairs of locking pins 51, one pair for each locking mechanism 40, for preventing movement of the driven gear 10 when the locking mechanisms 40 are in the locking position, by interfering with a portion of the round bearing surface 41 located between them (see FIGS. 18 and 19). In this exemplary embodiment, (see also FIG. 19), facing locking pins 51 are connected to each other thereby increasing its structural integrity. However, the connection between facing locking pins 51 is made by an element dimensioned so that it avoids interference with the pushers 61 of the pushing mechanism 60. In this particular embodiment, facing locking pins 51 are interconnected by a cylinder having a diameter sufficiently small to allow passage of the pushers 61 without interfering with them.

The plates 34 of the support 31 together with the locking mechanism 40 prevent lateral movement of the pinion gears 20 with respect to the driven gear 10, thereby preventing lateral disengagement of the pinion gear 20 and the driven gear 10.

As can be seen, the elements depicted in FIG. 17 are arranged substantially symmetrically.

FIG. 18 shows a perspective detail view of the actuation mechanism of the fifth exemplary embodiment shown in FIGS. 16 and 17. FIG. 19 shows a section view of the actuation mechanism shown in FIG. 18.

In this fifth exemplary embodiment, each driven gear 10 comprises a toothless gap 11, each toothless gap 11 being arranged facing one another. In FIGS. 18 and 19 some teeth 21 of the pinion gears 20 are arranged in the corresponding toothless gap 11, which means that the driving mechanism is depicted in the unengaged position wherein rotation of the pinion gears 20 do not drive the driven gear 10. In order to drive the driving mechanism from the unengaged position to the engaged position, wherein it is able to drive the driven gear 10 by rotating the pinion gears 20, the actuation mechanism comprises a pushing mechanism 60 comprising two pushers 61 for engaging the pusher engagement configuration 70. Other embodiments can have a different number of pushers 61. In this fifth exemplary embodiment, the pusher engagement configuration 70 comprises a protrusion 71 connected to the driven gear 10 and arranged in a plane containing the first axis and being perpendicular to the interaxis of the longitudinal axes of the locking pins 51.

In the locking position of the locking mechanisms 40, a portion of the round bearing surface 41 interferes with the corresponding two locking pins 51, so that movement of the driven gear 10, and thus, movement of the panels 2, is prevented.

This fifth exemplary embodiment also comprises a pair of rollers 32, in contact with the connecting surface of the double driven gear 10, that guide the movement of said double driven gear 10 and, in this particular embodiment, as they are located underneath the driven gear 10, also provide support to it.

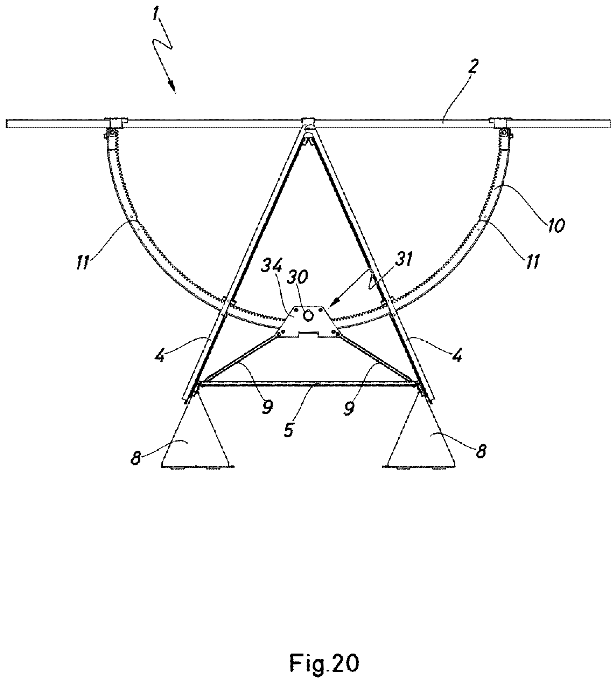

FIG. 20 shows a side view of a sixth exemplary embodiment of a system for rotatably driving and locking panels according to the present invention. In particular, FIG. 6 shows one of the distal ends, including a distal set of parallel legs 3 for supporting the panels 2. As in the exemplary embodiments previously shown, in this sixth exemplary embodiment the panels 2, and in particular, their support, are rotatable around a first axis.

In this sixth exemplary embodiment, each set of legs 3 comprises two inclined struts 4 connected to each other at the upper end thereof. The upper connection between the two inclined struts 4 is coaxial with the first axis around which the panels 2 rotate. The inclined struts 4 are also interconnected at their lower ends via a reinforcing strut 5 arranged so that the inclined struts 4 and the reinforcing strut 5 define a substantially isosceles triangle. The legs 3 shown further comprise a pair of anchoring units 8, one for each inclined strut 4, for anchoring the system 1 to the ground or any other suitable supporting surface.

As can be seen, in this exemplary embodiment, the support 31 is supported by a pair of auxiliar struts 9. As in other exemplary embodiments previously shown, the support 31 supports the driving shaft 30 and the other elements fixed or attached to it and comprises a pair of parallel plates 34, although in other embodiments, if present, the support 31 could have a different configuration.

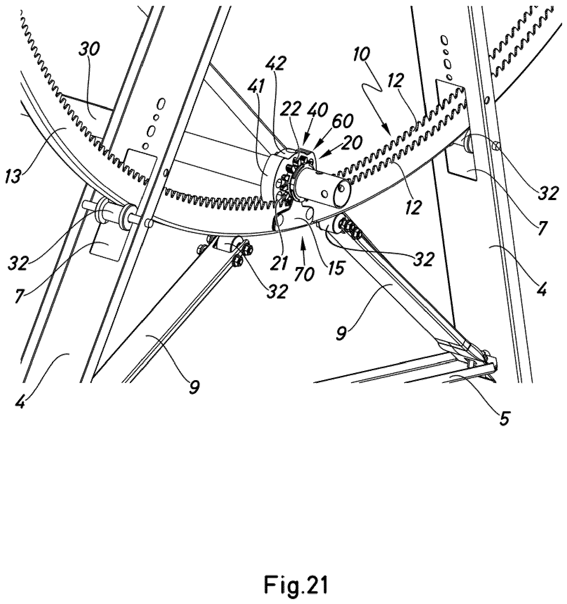

As in the first to fourth exemplary embodiments previously shown, in this sixth exemplary embodiment the driven gear 10 is arc shaped, and, therefore, the teeth 12 thereof are arranged in an arcuate manner (see, for example, FIG. 21). However, an embodiment having a configuration substantially similar to this sixth exemplary embodiment but having a straight or linear driven gear 10 is also possible.

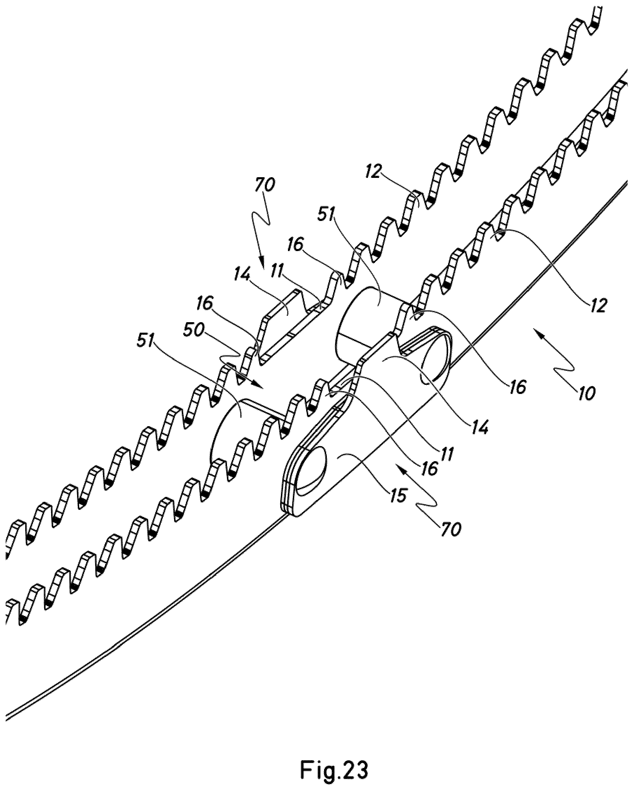

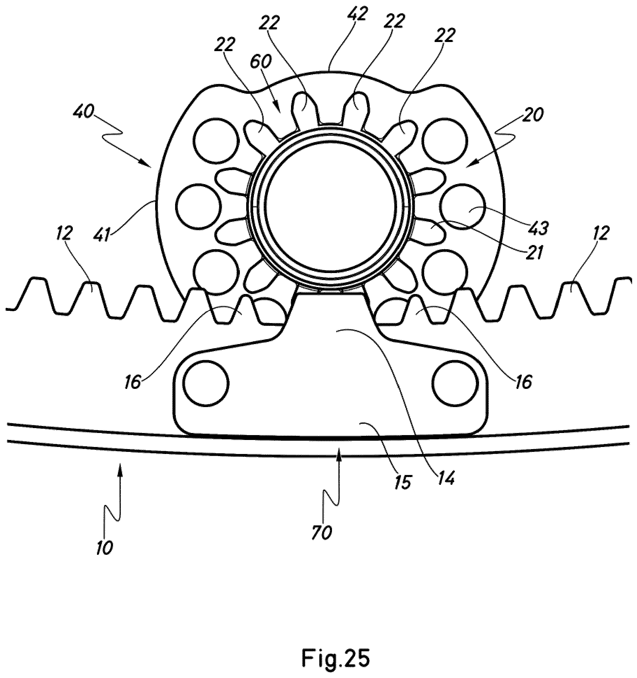

The driven gear 10 of this sixth exemplary embodiment illustrates the possibility of having more than one toothless gap 11. It is to be noted that for illustrative purposes, the corresponding plates 15 associated to the toothless gaps 11 in this sixth exemplary embodiment (see, for example, FIG. 23 or 25) have been omitted in FIG. 20, as otherwise the toothless gaps 11 could not be seen. Having multiple toothless gaps 11 along the driven gear 10 provides the system 1 with multiple stow positions of the panels 2. In the stow position of the system 1, loads coming from the panels 2 due to winds, etc. are not transferred to the driving shaft 30 and associated one or more driving motors. In case of multiple toothless gaps 11, said toothless gaps 11 are preferably evenly distributed along the driven gear 10 although this is not necessary and in certain embodiments having multiple toothless gaps 11 said toothless gaps 11 may be arranged in a non-uniform or non-symmetric manner.

Embodiments similar to the ones previously shown in the context of FIGS. 1 to 19 may also have more than one toothless gap 11.

FIG. 21 shows a perspective detail view of an actuation mechanism, partially disassembled, of the sixth exemplary embodiment previously shown in FIG. 20. In particular, in FIG. 21 the support 31 has been omitted in order to allow observation of the driving shaft 30, pinion gear 20, locking mechanism 40, etc.

As can be seen, similar to other exemplary embodiments previously shown, the driven gear 10 passes through openings 7 in the inclined struts 4 in this sixth exemplary embodiment. However, in other embodiments this may be different, as for example, in the second exemplary embodiment of FIGS. 9 to 13, wherein the driven gear 10 is contained in a plane parallel to the inclined struts 4 and located between them. Other arrangements are also possible within the scope of the present invention.

The driven gear 10 of this sixth exemplary embodiment is a double driving mechanism comprising two parallel and spaced apparat driven gears 10 connected to each other by a connecting surface 13 thereby defining a substantially U-shaped cross-section. In order to aid in supporting and guiding the double driven gear 10, this sixth exemplary embodiment comprises four rollers 32, two supported at the end of the auxiliar struts 9 supporting the support 31 and two more arranged at the corresponding opening 7 of the inclined struts 4. Said rollers 32 are in contact with the outer surface of the connecting surface 13 of the double driven gear 10.

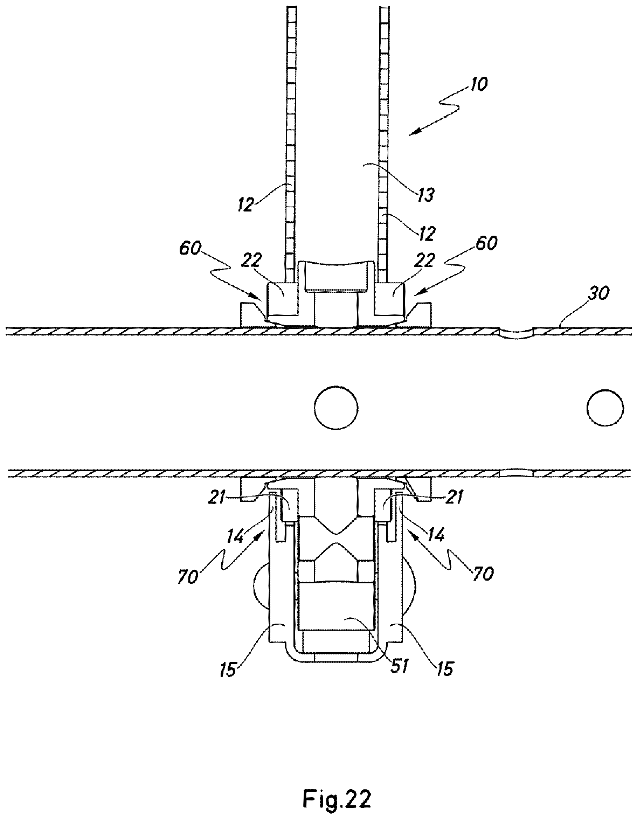

The pushing mechanism 60 and the pusher engagement configuration 70 of this sixth exemplary embodiment differ from the ones shown in exemplary embodiments previously shown. In particular, in this sixth exemplary embodiment the pushing mechanism 60 is in the form of wider teeth 22 (see, for more detail, FIG. 22) of the pinion gear 20 acting as pushers that engage with a pusher engagement configuration 70 in the form of one or more auxiliar gear teeth 14 arranged in a plane adjacent to the toothless gap 11. The operation of this mechanism will be described in more detail hereinbelow in the context of FIGS. 22 to 25.

The locking mechanism 40 of this sixth exemplary embodiment also differs from the ones previously shown. In particular, when compared with the one of the fifth exemplary embodiment, the locking mechanism 40 of the sixth exemplary embodiment differs in that it is made of a single element or piece, instead of the two pieces or elements of the locking mechanism 40 of the fifth exemplary embodiment. This provides an ease of manufacturing, cost reduction and increase mechanical strength.

FIG. 22 shows a section view of the actuation mechanism previously shown in FIG. 21. This section view allows to see the interaction between the pushing mechanism 60 and the pusher engagement configuration 70 of the sixth exemplary embodiment.

In this sixth exemplary embodiment the pinion gear 20 comprises a first group of teeth 21 having a first face width such that they only engage with the corresponding gear teeth 12 of the driven gear 10, and a second group of teeth 22 having a second face width greater than the first face width so that the teeth 22 engage with the corresponding gear teeth 12 of the driven gear 10 and with corresponding auxiliar gear teeth 14 arranged in a plane parallel and adjacent to the toothless gap 11.

When the driving mechanism is in the engaged position the first group teeth 21 and second group teeth 22 of the pinion gear 20 engage with the corresponding gear teeth 12 of the driven gear 10, as the teeth 21, 22 have substantially the same characteristics, beside the difference in face width.

In the unengaged position of the driving gear, also known as stow position, some teeth 21,22 are arranged in the corresponding toothless gap 11, so that the pinion gear 20 is unengaged from the driven gear 10 and loads coming from the panels 2 are not transmitted to the driving shaft 30 and corresponding one or more driving motors. This is a safeguard in case, for example, of strong winds, among other benefits of the unengaged or stow position.

Once in the unengaged position of the driving gear, by simply rotating the drive shaft 30 and the pinion gear 20 fixed to it, the teeth 21 of the first group are not able to engage again with the teeth 12 of the driven gear 10 in order to rotate the panels 2 around the first axis. In order to solve this problem, the teeth 22 of the second group, which in this exemplary embodiment are substantially identical to the teeth 21 of the first group besides the difference in face width, are able to engage with the at least one auxiliar gear tooth 14 driving the driving mechanism from the unengaged position to the engaged position. Consequently, the teeth 21 of the first group act as the pushing mechanism 60 and the at least one auxiliar gear tooth 14 act as the pusher engagement configuration 70 of this sixth exemplary embodiment.

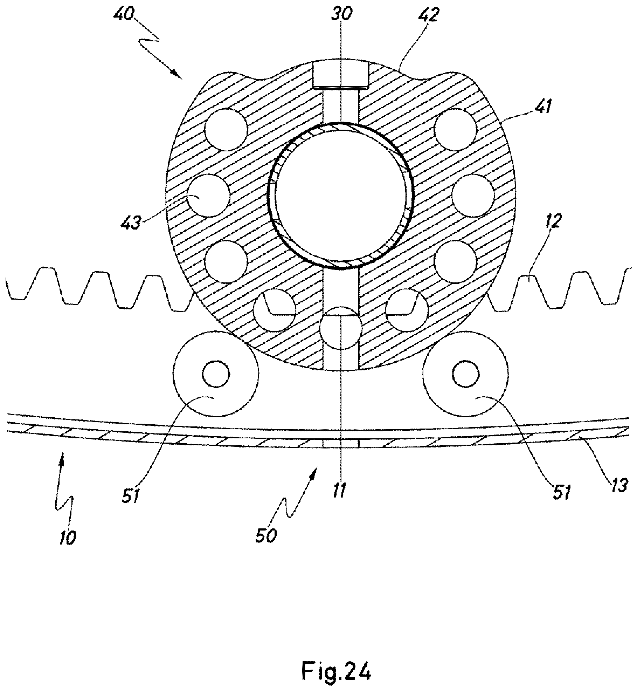

The locking configuration 50 of this sixth exemplary embodiment is similar to the one of the fifth exemplary embodiment and is described in more detail in the context of FIGS. 23 and 24.

FIG. 23 shows a perspective detail view of the driven gear 10 shown in FIGS. 20 to 22. As can be seen, the gear teeth 12, as well as the toothless gap 11, of each driven gear 10 are mutually aligned facing one another. In this exemplary embodiment, a plate 15 is attached to the outer lateral side of each driven gear 10, said plate 15 comprising one auxiliar tooth 14, so that the auxiliar teeth 14 is arranged in a plane parallel and adjacent to the corresponding toothless gap 11. In other embodiments, the plates 15 can have a different number of auxiliar teeth 14 which can be placed in a plane parallel and adjacent to the toothless gap 11 in a different way than the one of this sixth exemplary embodiment.

Located between the inner surfaces of each driven gear 10, there is the locking configuration 50, and in particular, the locking pins 51 thereof, of this sixth exemplary embodiment. In this particular embodiment, the same fixing element is used to fix the one end of each plate 15 and the corresponding locking pin 51. Said fixing element can be a rived, bolt, etc.

In this exemplary embodiment, the gear teeth 16 proximal to the toothless gap 11 have a different shape in order to avoid interference with the teeth 22 of the second group, or simply, wider teeth 22 (see, for more detail, FIG. 25).

FIG. 24 shows a transversal section view of the actuation mechanism of the sixth exemplary embodiment previously shown in FIGS. 21 and 22. The actuation mechanism is depicted in the locking position thereof wherein a portion of the round bearing surface 41 of the locking mechanism 40 is located between the locking pins 51 interfering with them so that the locking pins 51 act as a stop of the locking mechanism 40 thereby preventing unwanted movement of the driven gear 10.

This section view clearly shows the recessed region 42 of the locking mechanism 40 which allows that the physical interference between the round bearing surface 41 and the locking pins 51 to comes to an end.

As can be seen, in this exemplary embodiment the locking mechanism 40 comprises a plurality of lightening holes 43 that reduce the mass and, therefore, improve the dynamics of the locking mechanism 40. Said lightening holes 43 are completely optional and may not be present in other embodiments. Other embodiments similar to the ones previously shown in the context of FIGS. 1 to 19 could also have lightening holes 43 in their locking mechanisms 40 or other elements thereof.

FIG. 25 shows a side detail view of the actuation mechanism of the sixth exemplary embodiment previously shown in FIGS. 21, 22 and 24. In FIG. 25 the gear teeth 22 of the second group, or simply wider teeth 22 are designated with numeral 22, with the other teeth 21 of the pinion gear 20 being regular teeth 21 of the first group. As can be seen, in this sixth exemplary embodiment the pinion gear 20 comprises four consecutive wider teeth 22 that act as a pushing mechanism 60, although in other embodiments of similar configuration this number may differ. In configurations similar to the one of this sixth exemplary embodiment, at least two wider teeth 22 for each pinion gear 20 are preferred. Among the wider teeth 22 shown, the two preferred at the ones at the distal ends with the two in-between, that is to say, in other similar embodiments, at least one of the two teeth in-between the distal wider teeth 22 can be teeth 21 of the first group, or simply regular teeth 21. In other words, the wider teeth 22 may not be consecutive.

In order to prevent interference with the teeth 21, 22 of the pinion gear 20, the gear teeth 16 of the driven gear 10 proximal to the toothless gap 11, in this exemplary embodiment, have a different shape or profile. In particular, the gear teeth 16 proximal to the toothless gap 11 are slightly smaller than the regular gear teeth 12 of the driven gear 10 so that the projection of the outside cylinder of the teeth 21, 22 of the pinion gear does not interfere with the teeth 16. More precisely, in this sixth exemplary embodiment the gear teeth 16 have a smaller tooth depth and tooth thickness than the rest of gear teeth 12 of the driven gear. This may differ in other embodiment of a similar configuration.

Although in the sixth exemplary embodiment shown the driven gear 10 is an arc gear, an equivalent embodiment to this sixth exemplary embodiment, but with a gear rack as a driven gear 10, similar to the one of the fifth exemplary embodiment, instead of the arc gear is also possible. Further variations of this sixth exemplary embodiment within the scope of the present invention are also possible.

The system 1 for rotatably driving and locking panels 2 of the present invention can be configured for drive and lock any kind of suitable panels 2, for example, solar panels or windows of greenhouses.

References to directions up, down, left, right, etc. are based on the orientation and position of the elements as represented in the aforementioned drawings.

It will be understood that various parts of one embodiment of the invention can be freely combined with parts described in other embodiments, even being said combination not explicitly described, provided that such combination is within the scope of the claims and that there is no harm in such combination.

## Claims

1. System (1) for rotatably driving and locking panels (2) including at least one actuation mechanism comprising:
a driving mechanism including a driven gear (10) comprising gear teeth (12) and at least one toothless gap (11), said driven gear (10) driving a panel support rotative around a first axis and connected to a set of panels (2), and a pinion gear (20) comprising pinion gear teeth (21), coaxial and connected to a driving shaft (30) parallel to the first axis, the driving mechanism defining an engaged position in which the pinion gear (20) is engaged with the driven gear (10), and an unengaged position in which some teeth (21) of the pinion gear (20) are arranged in the toothless gap (11) unengaged from the driven gear (10);
a locking mechanism (40) including a round bearing surface (41), with a recessed region (42), coaxial and connected to the driving shaft (30) and a locking configuration (50), complementary to the round bearing surface (41), attached to the driven gear (10) adjacent to the toothless gap (11), the locking mechanism defining a locking position in which the round bearing surface (41) engages with the locking configuration (50) when the driving mechanism is in the unengaged position, preventing rotation of the driven gear (10), and an unlocking position in which the locking configuration (50) faces the recessed region (42) of the round bearing surface (41) when the driving mechanism is in the unengaged position allowing rotation of the driven gear (10);
a pushing mechanism (60) comprising at least one pusher (61), connected to the driving shaft (30), and a pusher engagement configuration (70) complementary to the pusher (61) and connected to the driven gear (10) adjacent to the toothless gap (11), the pushing mechanism (60) being configured to engage the pusher engagement configuration (70) with the pusher (61), pushing the driving mechanism from the unengaged position to the engaged position;
**characterized in that**:
the locking configuration (50) comprises two locking pins (51) which are configured to, in the locking position of the locking mechanism (40), prevent movement of the driven gear (10) by interfering with a portion of the round bearing surface (41) located between them; and **in that**
the pusher engagement configuration (70) is located in a plane containing the first axis, and passing between the two locking pins (51).

2. The system (1) according to claim 1, wherein each locking pin (51) defines a longitudinal axis thereof, and the pusher engagement configuration (70) is located in a plane containing the first axis, and being perpendicular to an interaxis of the longitudinal axes of the locking pins (51).

3. The system (1) according to claim 1 or 2, wherein the pusher engagement configuration (70) comprises at least one auxiliar gear tooth (14) arranged in a plane parallel and adjacent to the toothless gap (11) and wherein the pinion gear (20) comprises a first group of teeth (21) having a first face width such that they only engage the gear teeth (12) of the driven gear (10) and a second group of teeth (22) having a second face width, such that they engage with the gear teeth (12) of the driven gear (10) and the at least one auxiliar gear tooth (14); said second face width being greater than the first one.

4. The system (1) according to claim 1 or 2, wherein the pusher engagement configuration (70) comprises a protrusion (71) for interfering with the pusher (61), said protrusion (71) being located in the plane containing the first axis, and passing between the two locking pins (51) or in the plane containing the first axis, and being perpendicular to the interaxis of the longitudinal axes of the locking pins (51).

5. The system (1) according to any preceding claim, wherein the recessed region (42) of the round bearing surface (41) defines a lever and at least one of the two locking pins (51) defines a follower of said lever, the lever being configured to push the follower to the locking position of the locking mechanism (40) while the driving mechanism is in the unengaged position.

6. The system (1) according to any preceding claim, wherein the round bearing surface (41) has an external diameter larger than the outside diameter of the pinion gear (20), a portion of the round bearing surface (41) being adjacent to a lateral surface of the driven gear (10) supporting the two locking pins (51).

7. The system (1) according to claim 6, wherein the recessed region (42) has an external diameter larger than the outside diameter of the pinion gear (20), a portion of the recessed region (42) being adjacent to the lateral surface of the driven gear (10).

8. The system (1) according to any preceding claim, wherein the pusher (61) protrudes from an outer edge of a pushing plate (62), a portion of the pushing plate (62) laterally facing a lateral surface of the driven gear (10) supporting the pusher engagement configuration (70) and adjacent thereto.

9. The system (1) according to any preceding claim, wherein the panels (2) are supported on a set of parallel legs (3), successive along the first axis, and wherein each actuation mechanism is attached to one of the legs (3) of the set of parallel legs (3).

10. The system (1) according to claim 9, wherein each leg (3) comprises two inclined struts (4) connected to each other, directly or via an intermediate element, at its upper end.

11. The system (1) according to claim 10, wherein the two inclined struts (4) are coplanar, and the driven gear (10) passes through openings (7) defined in said two inclined struts (4).

12. The system (1) according to claim 10, wherein the two inclined struts (4) are arranged in corresponding parallel planes perpendicular to the first axis, and the driven gear (10) passes between the two inclined struts (4), being housed between said two parallel planes.

13. The system (1) according to any preceding claim, wherein the driving mechanism is a double driving mechanism comprising two parallel and spaced driven gears (10) connected to each other, each associated with one of two parallel and spaced pinion gears (20) connected to the driving shaft (30).

14. The system (1) according to any preceding claim, wherein the driven gear (10) is a gear rack comprising linear gear teeth (12) or an arc gear comprising arc gear teeth (12) and being coaxial with the first axis.

15. The system (1) according to any preceding claim, wherein the system is configured for rotatably driving and locking solar panels and the driving mechanism is connected to a set of solar panels.
